# EUROPÄISCHE PATENTSCHRIFT

(11) **EP 3 642 085 B1**
(45) Veröffentlichungstag und Bekanntmachung des Hinweises auf die Patenterteilung: **14.07.2021**
(21) Anmeldenummer: 18726992.3
(22) Anmeldetag: 24.05.2018
(51) Int. Cl.: B60R 25/24, G07C 9/00

(54) **VERFAHREN ZUM BETREIBEN EINER DIEBSTAHLSCHUTZEINRICHTUNG EINES KRAFTFAHRZEUGS, UND KRAFTFAHRZEUG MIT EINEM MOBILEN ENDGERÄT ALS FAHRZEUGSCHLÜSSEL**
METHOD FOR OPERATING AN ANTI-THEFT SYSTEM OF A MOTOR VEHICLE AND MOTOR VEHICLE HAVING A MOBILE TERMINAL AS THE VEHICLE KEY
PROCÉDÉ DE FONCTIONNEMENT D'UN DISPOSITIF DE PROTECTION ANTI-VOL D'UN VÉHICULE AUTOMOBILE, ET VÉHICULE AUTOMOBILE COMPRENANT UN TERMINAL MOBILE EN TANT QUE CLÉ DE VÉHICULE

(30) Priorität: 22.06.2017 DE 102017210568
(43) Veröffentlichungstag der Anmeldung: 29.04.2020
(73) Patentinhaber: Volkswagen Aktiengesellschaft, 38440 Wolfsburg (DE)
(72) Erfinder: BRÜCKNER, Claus-Peter, 38104 Braunschweig (DE)
(86) Internationale Anmeldenummer: PCT/EP2018/063596
(87) Internationale Veröffentlichungsnummer: WO 2018/233975

(56) Entgegenhaltungen:
- EP-A1- 2 381 392
- EP-A1- 2 860 071
- EP-A1- 3 072 317
- EP-A2- 1 910 134
- EP-A2- 3 086 296
- WO-A1-2014/091654
- WO-A1-2016/005013
- DE-A1-102010 015 390
- DE-A1-102013 010 250
- DE-A1-102014 015 718
- JP-A- 2007 132 085
- JP-A- 2012 151 785
- US-A1- 2013 183 957

## Beschreibung

Die Erfindung betrifft ein Verfahren zum Betreiben einer Diebstahlschutzeinrichtung eines Kraftfahrzeugs mithilfe eines mobilen Endgeräts. Als Diebstahlschutzeinrichtung wird dabei ein Gerät, eine Gerätekomponente oder ein System des Kraftfahrzeugs verstanden, das oder die eine oder mehrere Funktionen zum Freigeben oder Sperren der Benutzung des Kraftfahrzeugs bereitstellt, und beispielsweise eine Wegfahrsperre und/oder eine Alarmanlage und/oder eine Steuerung des Schließsystems, beispielsweise zum Entriegeln oder Verriegeln einer Kraftfahrzeugtür oder eines Kraftfahrzeugfensters, umfassen kann. Das mobile Endgerät kann dabei beispielsweise als Smartphone oder Tablet-PC ausgestaltet sein.

Bei der Nutzung von Smartphones als Fahrzeugschlüssel kann zum Beispiel ein Smartphone neben einem Ermöglichen eines Fahrzeugzutritts auch zum Deaktivieren oder Aktivieren einer Wegfahrsperre beim Motorstart benutzt werden. Dazu ist erforderlich, dass das als Fahrzeugschlüssel genutzte Smartphone vor dem Motorstart in einer bestimmten Stelle im Fahrzeug positioniert werden muss. Hierzu ist gängiger Weise eine Ladeschale in einer Mittelkonsole vorgesehen. Dadurch soll einerseits sichergestellt werden, dass sich das Smartphone beim Motorstart im Fahrzeug befindet und andererseits die Kommunikation zwischen Wegfahrsperre im Fahrzeug und dem als Fahrzeugschlüssel genutzten Smartphone erfolgen kann, die üblicherweise über eine Nahfeldkommunikationsverbindung ("Nearfield-Communication", "NFC") oder andere Funkstrecke mit geringer Funkreichweite ausgebildet ist).

Durch den Zwang zur Ablage des Smartphones zum Beispiel in der Ladeschale an der Mittelkonsole wird die Nutzung des Smartphones im Fahrzeug eingeschränkt. Ein Benutzer des Kraftfahrzeugs hat häufig den Wunsch, das Smartphone beispielsweise während der Fahrt als Navigationsgerät zu benutzen, zur Musikwiedergabe oder zum Telefonieren über eine Freisprechfunktion und es dazu mit einer Haltevorrichtung oder Halteeinrichtung zum Beispiel am Armaturenbrett oder an der Frontscheibe in einer bedienungsfreundlichen Position zu befestigen. In dieser Position kann jedoch die Wegfahrsperren-Kommunikation nicht erfolgen, sodass das Smartphone immer wieder aus der Haltevorrichtung genommen werden muss, wenn der Motor gestartet werden soll. Das ist besonders unkomfortabel, da üblicherweise auch während der Fahrt eine Kommunikation zwischen Wegfahrsperre und Smartphone erforderlich ist, zum Beispiel wenn Fenster geöffnet werden sollen oder im Zusammenhang mit einem Motorstart-Stopp-System. Außerdem hat ein mobiles Endgerät in der Mittelkonsole üblicherweise keinen GPS-Empfang, weswegen eine Navigationsfunktion des mobilen Endgeräts während der Fahrt nur sehr eingeschränkt genutzt werden kann. Selbst bei gutem Empfang müsste jedoch der Fahrer seinen Blick auf die Mittelkonsole werfen, zum Beispiel einem Navigationshinweis auf einen Bildschirm des mobilen Endgeräts zu sehen.

Die EP 1 910 134 B1 beschreibt ein Identifikations- und/oder Schließsystem zur Identifikation und/oder Freigabe eines technischen Systems mithilfe eines Smartphones. Eine beispielhafte Funktion kann eine Sperrung des Schlosses oder eine Freigabe oder Sperrung einer Lenkradsperre sein.

Die DE 602 25 772 T2 beschreibt ein Sicherheitssystem für eine Baumaschine, wobei eine persönliche Kennnummer von dem Mobiltelefon ausgelesen wird.

Aus der DE 10 2013 222 332 B4 sind ein System und ein Verfahren für von einer mobilen Vorrichtung aktivierten Fahrzeugfunktion bekannt, wobei eine Authentifizierung zwischen einem Fahrzeug und einer Vorrichtung mit einem eingebetteten Computerprozessor mithilfe von Funksignalen erfolgt.

Schließlich beschreibt die DE 10 2016 106 057 A1 ein Fahrzeugsystem mit einer Benutzerschnittstelle zum Programmieren eines drahtlosen Funkschlüssels.

Die DE 10 2011 011 697 A1 beschreibt ein Schließsystem für ein Fahrzeug mit einer Empfangseinrichtung, die fest in das Fahrzeug integrierbar ist, zum Empfangen von Berechtigungsdaten, einer Bereitstellungseinrichtung zum Bereitstellen der Berechtigungsdaten und einer Steuereinrichtung, die an die Empfangseinrichtung angeschlossen ist, zum Steuern einer Zugangsberechtigung und/oder einer Fahrberechtigung für das Fahrzeug.

Die DE 10 2013 221 116 A1 beschreibt ein fahrzeugeigenes System, ein Fahrzeugsteuerungsverfahren und ein Fahrzeugsteuerungssystem, und insbesondere ein fahrzeugeigenes System, ein Fahrzeugsteuerungsverfahren und ein Fahrzeugsteuerungssystem, welche die Durchführung eines Bedienungsvorgangs, wie beispielsweise das Starten eines Fahrzeugs und/oder das Verriegeln/Entriegeln einer Tür des Fahrzeugs, unter Verwendung eines tragbaren Universal-Endgeräts ermöglichen.

Die EP 2 381 392 A1 beschreibt eine Vorrichtung, die eine Kraftfahrzeugöffnungs-Verriegelungs- / Entriegelungsvorrichtung zum Steuern des Verriegelns / Entriegelns der Öffnungen eines Kraftfahrzeugs hat, nach Empfang von Authentifizierungsdaten eines Schlüssels über eine Leseschnittstelle.

Der Stand der Technik beschreibt entweder das Nutzen des Funkschlüssels oder eines mobilen Endgeräts von außerhalb des Kraftfahrzeugs, geht also nicht auf die Problematik während einer Fahrt ein, oder beschreibt die bereits erwähnte Funkkommunikation, die nur in einem sehr engen Sende- und Empfangsbereich der Nahfeldkommunikation stattfinden kann. Die bereits genannten Probleme werden also durch den Stand der Technik nicht gelöst.

Eine der Erfindung zu Grunde liegende Aufgabe ist das Erhöhen einer Fahrsicherheit während einer Fahrt und der Verbesserung des Nutzungskomforts.

Die gestellte Aufgabe wird gelöst durch das erfindungsgemäße Verfahren und die erfindungsgemäße Vorrichtung gemäß den nebengeordneten Patentansprüchen. Vorteilhafte Weiterbildungen sind durch die Unteransprüche gegeben.

Die Erfindung basiert auf der Idee, das mobilen Endgerät, vorzugsweise mithilfe einer Halteeinrichtung, in einem Bedienbereich zu lagern, wobei der Bedienbereich ein Bereich ist, der von dem Benutzer während der Fahrt leicht erreichbar ist, und wobei der Bedienbereich außerhalb von einem Sende -und Empfangsbereich einer Kommunikationseinrichtung einer Diebstahlschutzeinrichtung liegt. Mit anderen Worten ist das mobile Endgerät während der Fahrt nicht in der beispielhaften Ablage in der Mittelkonsole gelagert, sondern außerhalb des Sende- und Empfangsbereich der Kommunikationseinrichtung der Diebstahlschutzeinrichtung, beispielsweise in einer Haltevorrichtung an der Windschutzscheibe oder zum Beispiel in der Hand des Beifahrers. Die Kommunikation zwischen mobilen Endgerät und der Kommunikationseinrichtung der Diebstahlschutzeinrichtung erfolgt über eine Verbindungsvorrichtung zum Verbinden des mobilen Endgeräts und der Kommunikationseinrichtung, vorzugsweise zum Datenaustausch des mobilen Endgeräts mit der Kommunikationseinrichtung. Als Kommunikationseinrichtung wird dabei ein Gerät oder eine Gerätekomponente einer Diebstahlschutzvorrichtung zum Senden und/oder Empfangen von Signalen verstanden, die unter anderem hier zum Authentifizieren eine als Fahrzeugschlüssel dienenden mobilen Endgerätes unter anderem über eine Funkstrecke mit einer aus den Fahrzeuginnenraum beschränkten Reichweite eingerichtet ist. Durch das erfindungsgemäße Verfahren und das erfindungsgemäße Kraftfahrzeug kann das mobile Endgerät mit verbesserten Nutzungskomfort gleichzeitig zum Beispiel als Navigationsgerät oder Musikabspielgerät verwendet werden, und in einer für den Benutzer praktischen Position gelagert werden, sodass er während der Fahrt nicht auf die Mittelkonsole schauen muss, um den Bildschirm des mobilen Endgeräts zu sehen. Gleichzeitig zur Nutzung der weiteren Funktion, also der Nutzung als beispielsweise Navigationsgerät, erfüllt das mobile Endgerät weiterhin seine Funktion in der Kommunikation mit der Diebstahlschutzeinrichtung, so dass auch beispielsweise alle Funktionen der Diebstahlschutzeinrichtung während der Fahrt gesteuert und benutzt werden können, und sodass während der Fahrt keine Fehlermeldungen durch die Diebstahlschutzeinrichtung ausgegeben werden, es befände sich kein Fahrzeugschlüssel im Kraftfahrzeug. Dadurch wird der Fahrer weniger abgelenkt, womit eine Fahrsicherheit deutlich erhöht wird.

Das erfindungsgemäße Verfahren zum Betreiben einer Diebstahlschutzeinrichtung eines Kraftfahrzeugs mithilfe eines mobilen Endgeräts weist die folgenden Schritte auf. Die Diebstahlschutzeinrichtung weist dabei eine Kommunikationseinrichtung für eine Nahfeldkommunikation und eine Ablagevorrichtung zum Ablegen eines mobilen Endgeräts auf, wobei die Ablagevorrichtung innerhalb eines Sende- und Empfangsbereichs der Kommunikationseinrichtung ortsfest an einem ersten Innenraum Ausstattungselement des Kraftfahrzeugs angeordnet ist.

Es erfolgt ein Lagern des mobilen Endgeräts in einem Bedienbereich eines Innenraums des Kraftfahrzeugs, wobei der Bedienbereich außerhalb des Sende- und Empfangsbereichs liegt.

Mittels einer Verbindungsvorrichtung, also einem Bauteil zum physischen Verbinden des mobilen Endgeräts mit der Kommunikationseinrichtung, erfolgt ein Verbinden des gelagerten, mobilen Endgeräts mit der Kommunikationseinrichtung durch Befestigen eines ersten Verbindungselements der Verbindungseinrichtung an dem mobilen Endgerät und Befestigen eines weiteren Verbindungselements der Verbindungsvorrichtung mit der Diebstahlschutzeinrichtung. Das Befestigen ist dabei vorzugsweise ein Verbinden des jeweiligen Verbindungselements mit dem mobilen Endgerät oder Diebstahlschutzeinrichtung, wobei diese Verbindung wieder zerstörungsfrei gelöst werden kann.

Durch das Verbinden erfolgt ein Bereitstellen einer drahtgebundenen Datenkommunikationsverbindung mittels der Verbindungsvorrichtung zwischen dem gelagerten, mobilen Endgerät und der Kommunikationseinrichtung. Mit anderen Worten kann die Verbindungsvorrichtung auch als drahtgebundene Datenkommunikationsverbindung bezeichnet werden, und die Verbindungseinrichtung kann vorzugsweise als Kabel ausgestaltet sein.

Durch eine Steuereinrichtung erfolgt ein Feststellen der mittels der Verbindungsvorrichtung bereitgestellten Datenkommunikationsverbindung zwischen dem mobilen Endgerät und Feststellen einer Berechtigung des mobilen Endgeräts zum Betreiben der Diebstahlschutzeinrichtung. Beispielsweise kann beim Feststellen der Berechtigung durch die Steuereinrichtung ein Authentifizieren des mobilen Endgeräts durch beispielsweise Abfragen eines digital in dem mobilen Endgerät gespeicherten Zugangscodes erfolgen. In Abhängigkeit von der festgestellten Berechtigung erfolgt ein Aktivieren und/oder Deaktivieren einer Funktion der Diebstahlschutzeinrichtung.

Mit anderen Worten wird festgestellt, ob sich das mobile Endgerät innerhalb des Kraftfahrzeugs befindet, wenn das Mobilgerät über die Verbindungseinrichtung mit der Diebstahlschutzeinrichtung verbunden ist und über diese Verbindungseinrichtung der Datenaustausch mit der Diebstahlschutzeinrichtung erfolgt. Falls festgestellt wird, dass sich das mobile Endgerät innerhalb des Kraftfahrzeugs befindet, wird die Funktion der Diebstahlschutzeinrichtung aktiviert und/oder deaktiviert, das heißt die Diebstahlschutzeinrichtung wird betrieben, während sich das mobile Endgerät außerhalb des Sende - und Empfangsbereichs und innerhalb des Bedienbereichs befindet. Als Steuereinrichtung wird dabei ein Gerät oder eine Gerätekomponente verstanden, das oder die zum Verarbeiten und Erzeugen von Steuersignalen ausgestaltet und eingerichtet ist, und beispielsweise als Steuerplatine oder Steuerchip oder Steuergerät ausgestaltet sein kann. Die Steuereinrichtung kann eine Komponente des Kraftfahrzeugs und/oder des mobilen Endgeräts und/oder der Diebstahlschutzeinrichtung sein.

Es ergeben sich die oben genannten Vorteile. Ein weiterer Vorteil des erfindungsgemäßen Kraftfahrzeugs und des erfindungsgemäßen Verfahrens ist, dass der Benutzer des Kraftfahrzeugs den Befestigungsort des mobilen Endgeräts frei wählen kann. Ein weiterer Vorteil des erfindungsgemäßen Kraftfahrzeugs und des erfindungsgemäßen Verfahrens ist, dass der Benutzer des Kraftfahrzeugs den Befestigungsort des mobilen Endgeräts frei wählen kann. Obwohl beispielsweise eine Suche oder Abfrage nach dem mobilen Endgerät mittels Nahfeldkommunikation ergeben kann, dass das mobile Endgerät sich nicht im Sendeund Empfangsbereich befindet, kann trotzdem festgestellt werden, dass sich das mobile Endgerät innerhalb des Kraftfahrzeugs befindet und die Funktionen der Diebstahlschutzeinrichtung können weiterhin durchgeführt werden und mögliche Fehlermeldungen reduziert oder vermieden werden. Das Kraftfahrzeug muss somit nicht mit alternativen oder zusätzlichen Kommunikationseinrichtungen zum beispielsweisen Überbrücken längerer Funkstrecken nachgerüstet werden.

Gemäß einer Ausführungsform des erfindungsgemäßen Verfahrens kann die drahtgebundene Verbindungsvorrichtung neben der Datenübermittlung auch zum Aufladen des Energiespeichers des Mobilgerätes aus einer Stromquelleneinrichtung genutzt werden.

Als Stromquelleneinrichtung wird dabei ein Gerät oder ein Bauteil zum Versorgen eines Endgeräts mit Energie verstanden, beispielsweise eine Batterie oder ein Stromkreislauf oder eine Ladespule oder ein Stromanschluss des Kraftfahrzeugs. Der Ladevorgang kann dabei zum Beispiel durch Verbinden des mobilen Endgeräts mit der Verbindungsvorrichtung oder durch ein Sensorsignal aus dem mobilen Endgerät oder eines Sensors in der Verbindungsvorrichtung oder einer Haltevorrichtung oder in der Stromquelleneinrichtung initiert werden.

Das Feststellen der erfolgten Verbindung des mobilen Endgeräts in dem Innenraum kann, gemäß einer weiteren Ausführungsform des erfindungsgemäßen Verfahrens, durch Feststellen eines aktiven Datenaustauschs zur Authentifizierung des mobilen Endgerätes über die Verbindungseinrichtung zwischen dem mobilen Endgerät und der Diebstahlschutzeinrichtung erfolgen. Hierdurch wird das erfindungsgemäße Verfahren besonders effizient gestaltet.

Gemäß einer weiteren Ausführungsform des erfindungsgemäßen Verfahrens kann ein Bereitstellen einer Halteeinrichtung zum Lagern des mobilen Endgeräts erfolgen, wobei unter einer Halteeinrichtung eine Vorrichtung zum Halten oder Lagern des mobilen Endgeräts, oder ein Bereich eines Bauteils, an oder mit dem das mobile Endgerät gelagert werden kann, verstanden wird. Hierdurch kann das mobile Endgerät im Bedienbereich fixiert werden.

Die oben gestellte Aufgabe wird ebenfalls gelöst durch ein erfindungsgemäßes Kraftfahrzeug, das vorzugsweise als Kraftwagen ausgestaltet sein kann, beispielsweise als Personenkraftwagen. Das Kraftfahrzeug weist eine Diebstahlschutzeinrichtung auf, die eine Kommunikationseinrichtung für eine Nahfeldkommunikation mit einem mobilen Endgerät und eine Ablagevorrichtung zum Ablegen eines mobilen Endgeräts aufweist, wobei die Ablagevorrichtung innerhalb eines Sende- und Empfangsbereichs der Kommunikationseinrichtung ortsfest an einem ersten Innenraumausstattungselement des Kraftfahrzeugs angeordnet ist, beispielsweise an einer Mittelkonsole.

Das erfindungsgemäße Kraftfahrzeugs ist gekennzeichnet durch eine Steuereinrichtung, vorzugsweise eine Steuereinrichtung der Diebstahlschutzeinrichtung, wobei die Steuereinrichtung dazu eingerichtet ist, die eine Steuereinrichtung betreffenden Verfahrensschritte einer Ausführungsform des erfindungsgemäßen Verfahrens durchzuführen, beispielsweise um die eine der Ausführungsformen des erfindungsgemäßen Verfahrens zu steuern, auszuwerten und/oder zu überwachen. Die Steuereinrichtung kann hierzu optional eine Prozessoreinrichtung aufweisen, wobei die Prozessoreinrichtung beispielsweise mindestens einen Mikroprozessor und/oder mindestens einen Mikrokontroller aufweisen kann. Es ergeben sich die oben genannten Vorteile.

Gemäß einer besonders bevorzugten Ausführungsform des erfindungsgemäßen Kraftfahrzeugs weist dieses eine Verbindungsvorrichtung zum Verbinden des mobilen Endgeräts mit der Kommunikationseinrichtung auf, wobei die Verbindungsvorrichtung zur drahtgebundenen Datenkommunikation zwischen dem mobilen Endgerät und der Kommunikationseinrichtung ausgestaltet ist. Es ergeben sich die bereits oben genannten Vorteile. Zusätzlich ergibt sich für den Benutzer des Kraftfahrzeugs der Vorteil, dass keine zusätzliche Elektronik in eine optionale Halteeinrichtung und/oder in ein anderes Innenraumausstattungselement eingebaut werden muss. Durch die Verbindungsvorrichtung, die vorzugsweise als Kabel ausgestaltet sein kann, wird somit auch mechanisch dafür gesorgt, dass sich das mobile Endgerät in dem Kraftfahrzeug befindet und nicht beispielsweise durch den Benutzer durch ein geöffnetes Fenster an eine andere Person weitergegeben wurde.

Das Kraftfahrzeug kann optional eine Halteeinrichtung zum Lagern des mobilen Endgeräts in einem Bedienbereich des Innenraums aufweisen, wobei der Bedienbereich außerhalb des Sende- und Empfangsbereichs liegt. Die Halteeinrichtung kann vorzugsweise als Ablagefläche eines weiteren Innenraunausstattungselements oder beispielsweise als Halterung für das mobile Endgerät ausgestaltet sein. Es ergeben sich die oben genannten Vorteile. Ist die Halteeinrichtung in dem Bedienbereich angeordnet, kann als Halteeinrichtung ein einfaches, platzsparendes Bauteil verwendet werden.

Die Halteeinrichtung kann, gemäß einer Weiterbildung, eine ortsfest und außerhalb des Sende- und Empfangsbereich angeordnete Ablagefläche eines zweiten Innenraumausstattungselements aufweisen, beispielsweise eine Ablagefläche eines Armaturenbrett, und/oder eine ortsfest und außerhalb des Sende- und Empfangsbereichs angeordnete Halterung umfassen. Dies sind besonders praktische Weiterbildungen der Halteeinrichtung, durch die jeweils das mobile Endgerät für den Benutzer gut erreichbar positioniert werden kann. Gemäß einer besonders bevorzugten Ausführungsform des erfindungsgemäßen Kraftfahrzeugs kann die Verbindungsvorrichtung als Kabel ausgestaltet sein. Eine solche Verbindungsvorrichtung sorgt mechanisch dafür, dass sich das mobile Endgerät innerhalb des Kraftfahrzeugs befindet und beispielsweise nicht durch ein geöffnetes Fenster an eine weitere Person weitergegeben werden kann. Häufig hat der Benutzer bereits eine derart ausgestaltete Verbindungsvorrichtung beim Kauf des mobilen Endgeräts erhalten und es ist keine zusätzliche Verbindungsvorrichtung notwendig.

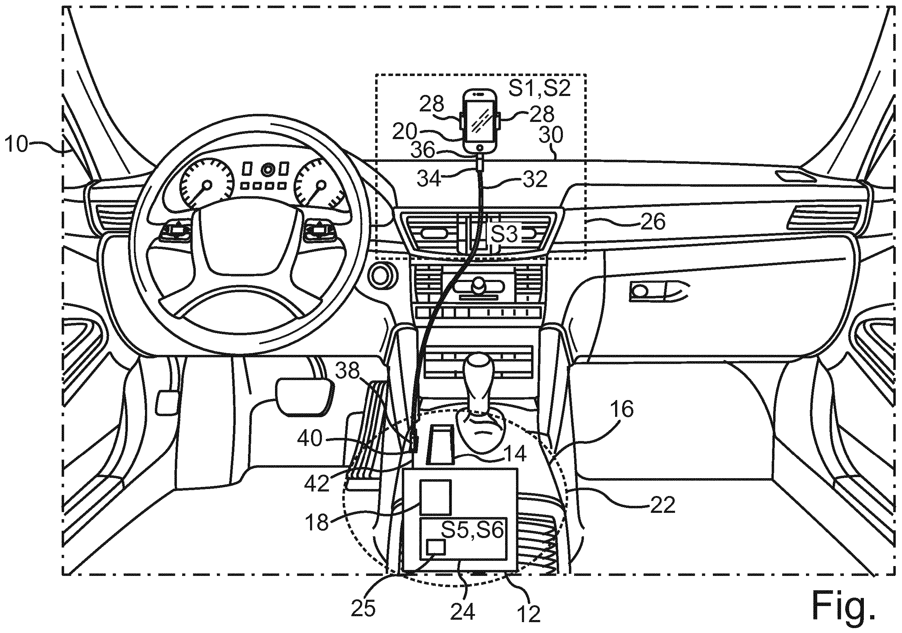

Im Folgenden ist ein Ausführungsbeispiel der Erfindung beschrieben. Hierzu zeigt die einzige Figur ("Fig."):
eine schematische Darstellung des erfindungsgemäßen Kraftfahrzeugs und des erfindungsgemäßen Verfahrens gemäß einem Ausführungsbeispiel.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

Die Figur veranschaulicht das Prinzip des erfindungsgemäßen Verfahrens anhand eines Ausführungsbeispiels.

Hierzu zeigt die Figur ein Kraftfahrzeug 10, das beispielsweise als Personenkraftwagen, alternativ zum Beispiel als Kraftrad oder Nutzfahrzeug, ausgestaltet sein kann. Das Kraftfahrzeug 10 weist eine Diebstahlschutzeinrichtung 12 auf, die beispielsweise Teil eines Bordcomputers oder eines Fahrerassistenzsystems sein kann und beispielsweise folgende Funktionen umfassen kann: eine Wegfahrsperre; und/oder ein Öffnen und/oder ein Schließen eines Fensters des Kraftfahrzeugs 10 und/oder einer Kraftfahrzeugtür; und/oder ein Verriegeln und/oder ein Entriegeln einer Kraftfahrzeugtür; und/oder eine Motor-Startfunktion und/oder ein Start-Stopp-System.

Im Beispiel der Figur kann die Diebstahlschutzeinrichtung 12 eine Ablagevorrichtung 14 aufweisen, die vorzugsweise in einer Mittelkonsole 16 des Kraftfahrzeugs 10 angeordnet sein kann. Die Ablagevorrichtung 14 kann beispielsweise als Netz oder Ablageschale in einer Armablage in der Mittelkonsole 16 ausgestaltet sein. Die Diebstahlschutzeinrichtung 12 weist eine Kommunikationseinrichtung 18 auf, die zum Kommunizieren mit einem mobilen Endgerät 20 ausgestaltet und eingerichtet ist und hierzu vorzugsweise mit einer dem Fachmann aus dem Stand der Technik bekannten Technologie zur Nahfeldkommunikation aufweisen kann. Ein Sende- und Empfangsbereich 22, in dem die Nahfeldkommunikation erfolgen kann, ist in der Figur als ovaler, durch eine gestrichelte Linie begrenzter Bereich gekennzeichnet. Die Ablagevorrichtung 14 liegt dabei innerhalb dieses Sende- und Empfangsbereichs 22. Beispielhaft kann die Kommunikationseinrichtung 18 zur Datenkommunikation über beispielsweise eine Bluetooth-Verbindung mit begrenzter Reichweite oder als Nahfeld-Funkverbindung (NFC) ausgestaltet und eingerichtet sein. Der Sende- und Empfangsbereich 22 kann dann beispielsweise einem Radius von wenigen Zentimetern bis beispielsweise 30 Zentimetern um die Kommunikationseinrichtung 18 liegen.

Eine Antennenanbindung der Diebstahlschutzeinrichtung 12 zur Telefonie kann beispielsweise ebenfalls in der Mittelkonsole angeordnet und nach außen gekoppelt sein. Die Diebstahlschutzeinrichtung 12 kann optional eine Ladespule als Stromquelleneinrichtung zum Aufladen des mobilen Endgeräts 20 aufweisen.

Das Kraftfahrzeug 10 weist eine Steuereinrichtung 24 auf, die vorzugsweise als Steuerplatine oder als Steuerchip ausgestaltet sein kann. Vorzugsweise kann dabei die Steuereinrichtung 24 ein Bestandteil der Diebstahlschutzeinrichtung 12 sein. Die Steuereinrichtung 24 kann optional eine Prozessoreinrichtung 25 aufweisen, die beispielsweise mehrere Mikroprozessoren aufweisen kann. In einer optionalen Speichereinrichtung (in der Figur nicht gezeigt), also in einem Speichermedium, die beispielsweise eine Speichereinrichtung der Prozessoreinrichtung 25 oder der Diebstahlschutzeinrichtung 12 sein kann, kann ein Programmcode gespeichert sein, der durch Ausführen durch die Prozessoreinrichtung 25 eine Ausführungsform des erfindungsgemäßen Verfahrens durchführen kann. Der beispielhafte Programmcode kann beispielsweise ein Anwenderprogramm ("App") sein. Alternativ zum Beispiel in der Figur kann Steuereinrichtung 24 beispielsweise in dem mobilen Endgerät 20 angeordnet sein und zum Beispiel zusätzlich die Speichereinrichtung mit dem Programmcode aufweisen.

Die Figur zeigt ebenfalls einen Bedienbereich 26, der vorzugsweise zwischen einem Fahrer des Kraftfahrzeugs und einer Windschutzscheibe des Kraftfahrzeugs 10 liegen kann. In der Figur ist der Bedienbereich 26 als gestricheltes Rechteck gezeigt. Der Bedienbereich 26 liegt außerhalb des Sende- und Empfangsbereichs 22 und ist so besser für den Fahrer des Kraftfahrzeugs 10 erreichbar, und bei einem Bedienen des mobilen Endgeräts 20, das beispielsweise als Smartphone oder Tablet-PC ausgestaltet sein kann, muss der Fahrer seinen Blick nicht vom Fahrgeschehen abwenden. In dem Beispiel der Figur kann das mobile Endgerät 20 bereits innerhalb des Bedienbereichs 26 angeordnet sein, und zwar mithilfe der optionalen Halteeinrichtung 28. Im Beispiel der Figur kann die Halteeinrichtung 28 eine Halterung für das mobile Endgerät 20 umfassen, die beispielsweise an der Windschutzscheibe befestigt werden kann, und in die das mobile Endgerät 20 beispielsweise eingeklemmt oder eingerastet werden kann. Das mobile Endgerät 20 kann so in dem Bedienbereich 26 gelagert werden. Alternativ kann die Halteeinrichtung 28 beispielsweise als Ablagefläche oder Ablagepad auf einem Armaturenbrett 30 ausgestaltet sein

Ein Benutzer des Kraftfahrzeugs 10, beispielsweise ein Fahrer des Kraftfahrzeugs 10, kann sich beispielsweise auf einer Fahrt befinden oder auf eine Fahrt vorbereiten. Beispielsweise zum Lösen der Wegfahrsperre oder zum Auslösen des Motorstaates müsste er sein mobiles Endgerät 20 in die Ablagevorrichtung 14 in der Mittelkonsole 16 liegen, damit sich das mobile Endgerät 20 in dem Sende- und Empfangsbereich 22, also in dem Nahfeldkommunikationsbereich, befindet, sodass mittels des mobile Endgeräts 20 der Benutzer nach einem dem Fachmann aus dem Stand der Technik bekannten Verfahren authentifiziert und die Wegfahrsperre gelöst werden kann. Der Fahrer möchte jedoch beispielsweise das mobile Endgerät 20 als Navigationsgerät nutzen. Damit er eine auf einem Bildschirm des mobilen Endgeräts dargestellte Navigationskarte sehen kann und seinen Blick nicht vom Fahrgeschehen abwenden und auf die Mittelkonsole 16 schauen muss, ist das mobile Endgerät in der Halteeinrichtung 28, der beispielhaften Halterung, gelagert. Ein weiterer Vorteil der Lagerung des mobilen Endgeräts 20 im Bedienbereich 26 ist, dass das mobile Endgerät 20 einen besseren Empfang für beispielsweise eine GPS-Signal hat, oder überhaupt erst ein solches Signal empfangen kann, während eine Positionierung in der Ablagevorrichtung 14 in der Mittelkonsole 16 unter Umständen zu einem Verlust des GPS-Signals führen kann.

Um ungewollte Fehlermeldungen der Diebstahlschutzeinrichtung 12 während der Fahrt zu reduzieren oder zu vermeiden, die beispielsweise auf einem Bildschirm eines Kombiinstruments oder eines Infotainmentsystems angezeigt werden können, falls die Diebstahlschutzeinrichtung 12 während der Fahrt feststellt, dass sich das mobile Endgerät 20 nicht innerhalb des Sende- und Empfangsbereichs befindet, ist eine Verbindungsvorrichtung 32 vorgesehen, die vorzugsweise als Kabel ausgestaltet sein kann. So kann umgangen werden, dass der Fahrer während der Fahrt das mobile Endgeräte 20 aus der Halteeinrichtung 28 entnehmen, und zum Beispiel zum Deaktivieren der beispielhaften Fehlermeldung das mobile Endgerät 20 kurzzeitig in die Ablagevorrichtung 14 legen muss.

Die Verbindungsvorrichtung 32 kann ein erstes Verbindungselement 34 aufweisen, das beispielsweise in eine entsprechende Buchse des mobilen Endgeräts 20 eingesteckt werden kann. Das erste Verbindungselement 34 kann dabei eine dem Fachmann aus dem Stand der Technik bekannte Schnittstelle für eine entsprechende Buchse 36 des mobilen Endgeräts 20 ausgestaltet sein. Die beispielhafte Verbindungsvorrichtung 32 der Figur kann ein weiteres Verbindungselement 38 aufweisen, das beispielsweise als Stecker für eine beispielhafte Buchse 40 der Diebstahlschutzeinrichtung 12 ausgestaltet sein kann. Mit anderen Worten kann die Verbindungsvorrichtung 32 vorzugsweise als Kabel für eine Datenkommunikation zwischen dem mobilen Endgerät 20 unter die Diebstahlschutzeinrichtung 12 ausgestaltet sein, und für beide Komponenten jeweils ein passendes Verbindungselement 34, 38 aufweisen. In der Figur ist dabei die Datenkommunikationsverbindung 42 der Diebstahlschutzeinrichtung 12 gezeigt, die die beispielhafte Buchse 40 mit der Kommunikationseinrichtung 18 verbinden kann.

Alternativ kann die Buchse 40 beispielsweise ein Stromanschluss des Kraftfahrzeugs 10 sein, und das Verbindungselement 38 kann beispielsweise als USB-Stecker oder USB-Adapter für beispielsweise eine 12-Volt Steckdose ausgestaltet sein.

In einem ersten, optionalen Verfahrensschritt S1 kann ein Bereitstellen der Halteeinrichtung 28 zum Lagern des mobilen Endgeräts 20 erfolgen. Das Lagern des mobilen Endgeräts erfolgt im Verfahrensschritt S2. Durch beispielsweise Einstecken der Verbindungsvorrichtung 32 wird das mobile Endgerät 20 mit der Kommunikationseinrichtung 18 räumlich verbunden, d.h. die Verbindungsvorrichtung 32 wird an dem mobilen Endgerät 20 und der Kommunikationseinrichtung 18 befestigt. Damit wird im Beispiel der Figur die drahtgebundene Datenkommunikationsverbindung zwischen dem mobilen Endgerät 20 und der Kommunikationseinrichtung 18 bereitgestellt (S4). Im Verfahrensschritt S5 stellt die Steuereinrichtung 24 die bereitgestellt Datenkommunikationsverbindung fest, und kann damit die Berechtigung des mobilen Endgeräts (20) feststellen. Beispielsweise kann die Steuereinrichtung 24 abfragen, ob das mobile Endgerät 20 der Kommunikationseinrichtung 18 über die drahtgebundenen Datenkommunikationsverbindung der Verbindungsvorrichtung 32 verbunden ist.

Alternativ oder zusätzlich kann über eine sogenannte Mirror-Link-Funktion mithilfe einer Schnittstelle des mobilen Endgeräts 20 beispielsweise zu einem Infotainmentsystem des Kraftfahrzeugs 10 festgestellt werden, dass ein Bildschirmbild des mobilen Endgeräts 20 gerade auf einem Bildschirm des Infotainmentsystems gespiegelt werden kann. In einer anderen Variante kann das Kraftfahrzeug 10 eine Sensoreinrichtung aufweisen, beispielsweise eine Kamera an einem Dachhimmel, die zum Beispiel den Bedienbereich 26 filmen kann und bei Erkennen des mobilen Endgeräts 20 in der Halteeinrichtung 28 mithilfe beispielsweise einer Bildanalysesoftware, die zum Beispiel eine Mustererkennung durchführen kann, ein Kamerabild auswerten und feststellen, dass auf dem Bild das mobile Endgerät 20 in der Halteeinrichtung 28 zu sehen ist. Anhand einer solchen Bilderkennung kann dann festgestellt werden, dass sich das mobile Endgerät 20 in dem Kraftfahrzeug 10 befinden kann (S5). In einer weiteren Variante kann beispielsweise eine Funkverbindung zu der Mittelkonsole 16 aufgebaut werden.

Die Steuereinrichtung 24 kann dann beispielsweise feststellen, dass ein mithilfe der Verbindungsvorrichtung 32 verbundenes mobiles Endgerät 20 beispielsweise einen Zugangscode aufweist, der eine Berechtigung zum der Wegfahrsperre und/oder beispielsweise zum Starten des Motors beschreiben kann. Bei Vorliegen der Berechtigung kann die beispielhafte Funktion, zum Beispiel ein Motorstart oder ein Öffnen eines Fensters, durchgeführt werden (S6).

Insgesamt beschreiben die Ausführungsbeispiele wie ein mobiles Endgerät 20, beispielsweise ein Smartphone, sicher und komfortabel als Fahrzeugschlüssel genutzt werden kann.

Gemäß einem weiteren Ausführungsbeispiel, das anhand der Figur beschrieben werden kann, kann das beispielhafte mobile Endgerät 20 als Smartphone ausgestaltet sein und zum Beispiel über einen Ladeanschluss und/oder eine Datenschnittstelle verfügen, die meist in einer Steckverbindung gleichzeitig kontaktiert sind, zum Beispiel eine USB-Schnittstelle und/oder eine Datenschnittstelle.

Zum Nutzen des mobilen Endgeräts 20 zum Beispiel als Navigationsgerät oder Musikplayer in der Halteeinrichtung 28, beispielsweise in einer Halterung, kann das beispielhafte Smartphone über die Verbindungsvorrichtung 32, beispielsweise ein Datenkabel, mit dem Kraftfahrzeug 10 verbunden werden (S3). In diesem Fall kann vorzugsweise eine Authentisierungskommunikation zwischen einer beispielhaften Wegfahrsperre im Kraftfahrzeug 10 und den beispielhaften Smartphone bei diese beispielhafte Kabelverbindung erfolgen. Dadurch kann sichergestellt werden, dass sich das mobile Endgerät 20 in Kraftfahrzeug 10 befindet, wobei das beispielhafte Smartphone zum Beispiel in dem Innenraum mit den beispielhaften Kabel fest mit einer fahrzeugseitigen Buchse als Verbindungselement 38 verbunden sein kann, und eine Kommunikation zur Deaktivierung der Wegfahrsperre kann nicht nur an dem vorbestimmten Ablageort, der Ablagevorrichtung 14, erfolgen, sondern auch an einer durch den Benutzer bestimmten Position, vorzugsweise im Bedienbereich 26. Das Verfahren kann vorsehen, dass nach dem das als Fahrzeugschlüssel genutzte mobile Endgerät 20 nicht an dem vorbestimmten Ablageort gefunden wurde, geprüft werden kann (S5), ob das mobile Endgerät 20 per der Verbindungsvorrichtung 32 mit dem Kraftfahrzeug 10 verbunden ist und in diesem Fall die beispielhafte Wegfahrsperren-Kommunikation über diese Verbindungsvorrichtung 32, das beispielhafte Kabel, durchgeführt werden kann.

Das mobile Endgerät kann durch die erfindungsgemäße Anordnung und das Verfahren ohne die beschriebene Nutzungseinschränkungen während der Fahrt beispielsweise auch als Navigationsgerät oder Musikplayer in der beispielhaften Halterung, beispielsweise am Armaturenbrett, genutzt werden. Mit anderen Worten werden die Nutzungsbeschränkungen in Verbindung mit dem bisher fest vorbestimmten Ablageort in der Ablagevorrichtung 14 aufgehoben.

Gemäß einem weiteren Ausführungsbeispiel kann der vorbestimmte Ablageort, die Ablagevorrichtung 14, für das beispielhafte Smartphone als mobiles Endgerät 20 eine für die Nutzung des mobilen Endgeräts 20 als zum Beispiel Navigationsgerät günstige Position sein. Beispielsweise kann der vorbestimmte Ablageort sich im Bedienbereich 26 befinden. Mit anderen Worten kann die Ablagevorrichtung 14, und optional die Komponenten der Diebstahlschutzeinrichtung 12, in dem beispielhaften Armaturenbrett 30 verbaut werden. Eine vorbestimmte Position zum Beispiel auf dem Armaturenbrett 30 erfordert jedoch auch ein fahrzeugseitig vom Hersteller vorgesehene Halteeinrichtung 28, die gleichzeitig eine Ablesbarkeit und eine Bedienbarkeit des mobilen Endgeräts 20 durch den Benutzer des Kraftfahrzeugs, den beispielhafte Fahrer, ermöglichen.

Gemäß einem weiteren Ausführungsbeispiel kann die beispielhafte Halterung für ein Nutzen des mobilen Endgeräts 20 während der Fahrt eine zusätzliche Kommunikationseinrichtung enthalten (in der Figur nicht gezeigt), über die die Kommunikation der beispielhaften Funktion der Wegfahrsperre, beispielsweise zum Deaktivieren der Wegfahrsperre, erfolgen kann. Hierfür könnte beispielsweise ein Funksender in der Halteeinrichtung 28 vorgesehen sein.

### Bezugszeichenliste

- 10: Kraftfahrzeug
- 12: Diebstahlschutzeinrichtung
- 14: Ablagevorrichtung
- 16: Mittelkonsole
- 18: Kommunikationseinrichtung
- 20: mobiles Endgerät
- 22: Sende- und Empfangsbereich
- 24: Steuereinrichtung
- 25: Prozessoreinrichtung
- 26: Bedienbereich
- 28: Halteeinrichtung
- 30: Armaturenbrett
- 32: Verbindungsvorrichtung
- 34: erstes Verbindungselement
- 36: Buchse
- 38: zweites Verbindungselement
- 40: Buchse
- 42: Datenkommunikationsverbindung
- S1 - S6: Verfahrensschritte

## Patentansprüche

1. Verfahren zum Betreiben einer Diebstahlschutzeinrichtung (12) eines Kraftfahrzeugs (10), die Diebstahlschutzeinrichtung (12) aufweisend eine Kommunikationseinrichtung (18) für eine Nahfeldkommunikation und eine Ablagevorrichtung (14) zum Ablegen eines mobilen Endgeräts (20), wobei die Ablagevorrichtung (14) innerhalb eines Sende- und Empfangsbereiches (22) der Kommunikationseinrichtung (18) ortsfest an einem ersten Innenraumausstattungselement des Kraftfahrzeugs (10) angeordnet ist, das Verfahren aufweisend die Schritte:
- Lagern des mobilen Endgeräts (20) in einem Bedienbereich (26) eines Innenraums des Kraftfahrzeugs (10, S2), wobei der Bedienbereich (26) außerhalb des Sende - und Empfangsbereichs (22) liegt,
- mittels einer Verbindungsvorrichtung (32):
▪ Verbinden des gelagerten, mobilen Endgeräts (20) mit der Kommunikationseinrichtung (18, S3) durch Befestigen eines ersten Verbindungselements (34) der Verbindungsvorrichtung (32) mit dem mobilen Endgerät (20) und Befestigen eines zweiten Verbindungselements (38) mit der Diebstahlschutzeinrichtung (12), und
▪ Bereitstellen einer drahtgebundenen Datenkommunikationsverbindung zwischen dem gelagerten, mobilen Endgerät (20) und der Kommunikationseinrichtung (18, S4),
- durch eine Steuereinrichtung (24): Feststellen der mittels der Verbindungsvorrichtung (32) bereitgestellten Datenkommunikationsverbindung zwischen dem mobilen Endgerät (20) (S5) und Feststellen einer Berechtigung des mobilen Endgeräts (20) zum Betreiben der Diebstahlschutzeinrichtung (12); und
- in Abhängigkeit von der festgestellten Berechtigung: durch die Steuereinrichtung (24): Aktivieren und/oder Deaktivieren einer Funktion der Diebstahlschutzeinrichtung (12, S6) während sich das mobile Endgerät (20) außerhalb des Sende - und Empfangsbereichs (22) und innerhalb des Bedienbereichs (26) befindet.

2. Verfahren nach Anspruch 1, **gekennzeichnet durch**
Feststellen der erfolgten Verbindung des mobilen Endgeräts (20, S5) in dem Innenraum durch Feststellen eines aktiven Datenaustauschs zur Authentifizierung des mobilen Endgerätes (20) über die Verbindungseinrichtung (32) zwischen dem mobilen Endgeräte (20) und der Diebstahlschutzeinrichtung (12).

3. Verfahren nach einem der vorhergehenden Ansprüche, **gekennzeichnet durch**
- Bereitstellen einer Halteeinrichtung (28, S1) zum Lagern des mobilen Endgeräts.

4. Kraftfahrzeug (10), aufweisend:
- eine Diebstahlschutzeinrichtung (12), die eine Kommunikationseinrichtung (18) für eine Nahfeldkommunikation und eine Ablagevorrichtung (14) zum Ablegen eines mobilen Endgeräts (20) aufweist, wobei die Ablagevorrichtung (14) innerhalb eines Sende- und Empfangsbereiches (22) der Kommunikationseinrichtung (18) ortsfest an einem ersten Innenraumausstattungselement des Kraftfahrzeugs angeordnet ist,
**gekennzeichnet durch**
- eine Steuereinrichtung (24), die dazu eingerichtet ist, die eine Steuereinrichtung (24) betreffenden Verfahrensschritte eines Verfahrens nach einem der vorhergehenden Ansprüche durchzuführen.

5. Kraftfahrzeug nach Anspruch 4, **gekennzeichnet durch**
- eine Verbindungsvorrichtung (32) zum Verbinden des mobilen Endgeräts (20) mit der Kommunikationseinrichtung (18), wobei die Verbindungsvorrichtung (32) zur drahtgebundenen Datenkommunikation zwischen dem mobilen Endgerät (20) und der Kommunikationseinrichtung (18) ausgestaltet ist.

6. Kraftfahrzeug nach einem der Ansprüche 4 oder 5, **dadurch gekennzeichnet, dass** das erste Innenraumausstattungselement als Mittelkonsole (16) ausgestaltet ist.

7. Kraftfahrzeug nach einem der Ansprüche 4 bis 6, **gekennzeichnet durch**
- eine Halteeinrichtung (28) zum Lagern des mobilen Endgeräts (20) in einem Bedienbereich (26) des Innenraums, wobei der Bedienbereich (26) außerhalb des Sende - und Empfangsbereichs (22) liegt, vorzugsweise wobei eine Halteeinrichtung (28) in dem Bedienbereich (26) angeordnet ist.

8. Kraftfahrzeug nach Anspruch 7, **dadurch gekennzeichnet, dass** die Halteeinrichtung (28) eine ortsfest und/oder außerhalb des Sende - und Empfangsbereichs (22) angeordnete Ablagefläche eines zweiten Innenraunausstattungselements umfasst; und/oder eine ortsfest und/oder außerhalb des Sende - und Empfangsbereichs (22) angeordnete Halterung.

9. Kraftfahrzeug nach einem der Ansprüche 4 bis 8, **dadurch gekennzeichnet, dass** die Verbindungsvorrichtung (32) als Kabel ausgestaltet ist.

## Claims

1. Method for operating an anti-theft system (12) of a motor vehicle (10), the anti-theft system (12) comprising a communication device (18) for near-field communication and a storage device (14) for depositing a mobile terminal (20), wherein said storage device (14) is arranged fixedly on a first interior equipment element of the motor vehicle (10) within a transmitting and receiving range (22) of the communication device (18); the method includes the steps:
- storing the mobile terminal (20) in an operating area (26) of an interior of the motor vehicle (10, S2), wherein the operating area (26) lies outside of the transmitting and receiving range (22),
- by means of a connecting device (32):
▪ connecting the stored mobile terminal (20) to the communication device (18, S3) by attaching a first connection element (34) of the connection device (32) to the mobile terminal (20) and attaching a second connection element (38) to the anti-theft system (12), and
▪ providing a wired data communication link between the stored mobile terminal (20) and the communication device (18, S4),
- via a control device (24): establishing the data communication connection provided by means of the connection device (32) between the mobile terminal (20) (S5), and establishing an authorization of the mobile terminal (20) to operate the anti-theft system (12); and
- depending on the determined authorization: via the control device (24): activating and/or deactivating a function of the anti-theft system (12, S6) while the mobile terminal (20) is outside of the transmitting and receiving range (22) and within the operating area (26).

2. Method according to claim 1, **characterized by** establishing that the connection of the mobile terminal (20, S5) in the interior has occurred by establishing an active data exchange for authenticating the mobile terminal (20) via the connection device (32) between the mobile terminal (20) and the anti-theft system (12).

3. Method according to any one of the preceding claims, **characterized by**
- providing a holding device (28, S1) for storing the mobile terminal.

4. Motor vehicle (10) comprising:
- an anti-theft system (12) which has a communication device (18) for near-field communication and a storage device (14) for depositing a mobile terminal (20), wherein the storage device (14) is arranged fixedly, within a transmitting and receiving range (22) of the communication device (18), at a first interior equipment element of the motor vehicle,
**characterized by**
- a control device (24) which is configured to implement the method steps, relating to a control device (24), of a method according to one of the preceding claims.

5. Motor vehicle according to claim 4, **characterized by**
- a connection device (32) for connecting the mobile terminal (20) to the communication device (18), wherein the connection device (32) is designed for wired data communication between the mobile terminal (20) and the communication device (18).

6. Motor vehicle according to any one of claims 4 or 5, **characterized in that** the first interior equipment element is designed as a center console (16).

7. Device according to any one of claims 4 to 6, **characterized by**
- a holding device (28) for storing the mobile terminal (20) in an operating area (26) of the interior, wherein the operating area (26) lies outside of the transmitting and receiving range (22), preferably wherein a holding device (28) is arranged in the operating area (26).

8. Motor vehicle according to claim 7, **characterized in that** the holding device (28) comprises a storing surface of a second interior equipment element, which storing surface is arranged fixedly and/or outside of the transmitting and receiving region (22); and/or a holder arranged fixedly and/or outside the transmitting and receiving range (22).

9. The motor vehicle according to any one of claims 4 through 8, **characterized in that** the connecting device (32) is designed as a cable.

## Revendications

1. Procédé de fonctionnement d'un dispositif de protection anti-vol (12) d'un véhicule automobile (10), le dispositif de protection anti-vol (12) présentant un dispositif de communication (18) pour une communication en champ proche et un appareil de support (14) pour le support d'un terminal mobile (20), l'appareil de support (14) étant disposé au sein d'une portée d'émission et de réception (22) du dispositif de communication (18) de manière fixe sur un premier élément d'équipement de l'espace intérieur du véhicule automobile (10), le procédé présentant les étapes de :
- montage du terminal mobile (20) dans une portée de commande (26) d'un espace intérieur du véhicule automobile (10, S2), la portée de commande (26) étant située en dehors de la portée d'émission et de réception (22),
- au moyen d'un appareil de connexion (32) :
▪ connexion du terminal mobile (20) monté au dispositif de communication (18, S3) par la fixation d'un premier élément de connexion (34) de l'appareil de connexion (32) au terminal mobile (20) et la fixation d'un deuxième élément de connexion (38) au dispositif de protection anti-vol (12) et
▪ fourniture d'une connexion de communication de données filaire entre le terminal mobile (20) monté et le dispositif de communication (18, S4),
- par un dispositif de commande (24) : établissement de la connexion de communication de données produite au moyen de l'appareil de connexion (32) entre le terminal mobile (20) (S5) et établissement d'un droit du terminal mobile (20) à faire fonctionner le dispositif de protection anti-vol (12) ; et
- en fonction du droit établi : par le dispositif de commande (24) : activation et/ou désactivation d'une fonction du dispositif de protection anti-vol (12, S6) pendant que le terminal mobile (20) se trouve en dehors de la portée d'émission et de réception (22) et à l'intérieur de la portée de commande (26).

2. Procédé selon la revendication 1, **caractérisé par**
l'établissement de la connexion présente du terminal mobile (20, S5) dans l'espace intérieur par l'établissement d'un échange de données actif pour l'authentification du terminal mobile (20) à travers le dispositif de connexion (32) entre le terminal mobile (20) et le dispositif de protection anti-vol (12).

3. Procédé selon l'une quelconque des revendications précédentes, **caractérisé par**
- la fourniture d'un dispositif de retenue (28, S1) pour le montage du terminal mobile.

4. Véhicule automobile (10), présentant :
- un dispositif de protection anti-vol (12), lequel présente un dispositif de communication (18) pour une communication en champ proche et un appareil de support (14) pour le support d'un terminal mobile (20), l'appareil de support (14) étant disposé à l'intérieur d'une portée d'émission et de réception (22) du dispositif de communication (18) de manière fixe sur un premier élément d'équipement de l'espace intérieur du véhicule automobile,
**caractérisé par**
- un dispositif de commande (24), lequel est conçu pour exécuter les étapes de procédé concernant un dispositif de commande (24) d'un procédé selon l'une quelconque des revendications précédentes.

5. Véhicule automobile selon la revendication 4, **caractérisé par**
- un appareil de connexion (32) pour la connexion du terminal mobile (20) au dispositif de communication (18), l'appareil de connexion (32) étant conçu pour une communication de données filaire entre le terminal mobile (20) et le dispositif de communication (18).

6. Véhicule automobile selon l'une quelconque des revendications 4 ou 5, **caractérisé en ce que** le premier élément d'équipement de l'espace intérieur est conçu comme une console centrale (16).

7. Véhicule automobile selon l'une quelconque des revendications 4 à 6, **caractérisé par**
- un dispositif de retenue (28) pour le montage du terminal mobile (20) dans une portée de commande (26) de l'espace intérieur, la portée de commande (26) étant située en dehors de la portée d'émission et de réception (22), de préférence un dispositif de retenue (28) étant disposé dans la portée de commande (26).

8. Véhicule automobile selon la revendication 7, **caractérisé en ce que**
le dispositif de retenue (28) comprend une surface de support d'un deuxième élément d'équipement de l'espace intérieur disposée de manière fixe et/ou en dehors de la portée d'émission et de réception (22) ; et/ou un support disposé de manière fixe et/ou en dehors de la portée d'émission et de réception (22).

9. Véhicule automobile selon l'une quelconque des revendications 4 à 8, **caractérisé en ce que** l'appareil de connexion (32) est conçu comme un câble.
